# EUROPEAN PATENT SPECIFICATION

(11) **EP 2 813 746 B1**
(45) Date of publication and mention of the grant of the patent: **23.08.2017**
(21) Application number: 13746900.3
(22) Date of filing: 06.02.2013
(51) Int. Cl.: B63J 99/00, F17C 7/02, F17C 7/04

(54) **GAS SUPPLY DEVICE**
GASZUFUHRVORRICHTUNG
DISPOSITIF D'ALIMENTATION EN GAZ

(30) Priority: 07.02.2012 JP 2012023909
(43) Date of publication of application: 17.12.2014
(73) Proprietor: Iwatani Corporation, Osaka 541-0053 (JP); Atec Co., Ltd., Akashi-city, Hygo 674-0093 (JP); Mitsubishi Heavy Industries, Ltd., Tokyo 108-8215 (JP)
(72) Inventor: KUSAKA Hiroyuki, Osaka-shi Osaka 541-0053 (JP); TAKATA Takayoshi, Osaka-shi Osaka 541-0053 (JP); TAKAO Kazuhiro, Osaka-shi Osaka 541-0053 (JP); GOTO Katsuhiko, Akashi-city Hyogo 674-0093 (JP); SHIBUYA Toshiki, Akashi-city Hyogo 674-0093 (JP); YAMADA Daisuke, Tokyo 108-8215 (JP)
(74) Representative: Dantz, Jan Henning
(86) International application number: PCT/JP2013/052694
(87) International publication number: WO 2013/118756

(56) References cited:
- EP-A2- 0 922 901
- DE-A1-102004 061 026
- GB-A- 297 384
- JP-A- H1 019 197
- JP-A- H11 257 595
- JP-A- 2008 069 874
- JP-B- S4 317 874
- US-A- 2 260 357
- US-A- 2 260 357
- US-A- 2 454 934
- US-A- 2 502 588
- US-A1- 2007 144 590

## Description

### TECHNICAL FIELD

The present invention relates to a device for supplying, for example, liquefied gas such as liquefied natural gas (LNG) or the like to an appropriate destination such as a power unit or the like. In more detail, the present invention relates to a gas supply device for supplying gas, in which a part of liquefied gas stored in a tank is vaporized and returned to a gas phase space in a top part of the tank so that an inner pressure of the tank is raised to a necessary level.

### BACKGROUND ART

US 2,260,357 discloses an apparatus for dispensing gas material comprising a container from which liquefied gas is withdrawn and vaporized by heating means. The vaporized gas is returned to the container within a heat-exchanging coil and is then guided to a consumer.

In, for example, a marine vessel using LNG as a fuel (hereinafter, referred to as an "LNG-fueled marine vessel"), liquefied gas is stored in a tank at a predetermined temperature and a predetermined pressure (low-temperature heat-insulating tank). The liquefied gas is vaporized and used as, for example, a fuel for an engine. In this process, the tank is pressurized so that the pressure of the vaporized liquefied gas to be supplied is of a level required by the destination thereof such as an engine or the like (e.g., Patent Documents 1, 2 and 3 described below).

Namely, the low-temperature heat-insulating tank is connected to a supply path used to supply vaporized liquefied gas to the supply destination and also is connected to a reflux path used to reflux a part of the liquefied gas, guided outside the tank, back to the tank after the part of the liquefied gas is vaporized by a heat exchanger.

A pipe used to transport the liquefied gas is located outside the low-temperature heat-insulating tank. Therefore, if the liquefied gas leaks out from the pipe for some reason, the body of the marine vessel may be exposed to the liquefied gas, which has a very low temperature. This may cause brittle fracture to a part of the marine vessel due to the very low temperature.

A similar device is disclosed in Patent Document 4. This device includes a first gas supply line used to supply vaporized gas from a tank to a supply destination, and also a second gas supply line. A part of liquefied gas in the tank is transported to a gas storage, different from the tank, via a pump. The gas in the gas storage is pressurized and vaporized, and the vaporized gas is transported via the second gas supply line to be joined with the gas in the first gas supply line.

In the gas storage, a temperature/pressure control unit that adjusts the temperature of a liquid phase part to control the inner pressure of the tank is provided. Namely, the inner pressure of the tank is indirectly controlled based on the temperature of the liquid phase part in the gas storage provided outside the tank.

This device also has the liquefied gas transported outside the tank, and thus has substantially the same problem as that of the above-described device. When there occurs a need to repair the pump suddenly, another problem may arise.

This will be described more specifically. When a periodical inspection or overhaul is to be performed, there is no problem because the liquefied gas remaining in the tank is fully purged by inert gas such as nitrogen or the like and the temperature of the pump itself is raised. However, when there occurs a need to repair the pump suddenly, the repair work may need to be performed while the liquefied gas remains in the pump. In this case, there is a risk that the operator may be frostbitten by the liquefied gas remaining in the pump or the working environment is deteriorated by the liquefied gas leaking outside the pump during the repair work.

In the device described in Patent Document 4, the inner pressure of a top space of the gas storage is indirectly controlled by temperature adjustment on the liquefied gas in the gas storage, as described above. However, an attempt to control the temperature of the liquefied gas does not quickly result in a change in the temperature because the thermal energy of the liquefied gas has a poor level of readiness . In addition, the device has a structure in which the gas that is vaporized in the gas storage is joined with the gas in the first gas supply line. Therefore, the responsiveness to control is inferior to that provided by the method described in Patent Document 1 of introducing the vaporized gas directly into the top space of the tank to control the pressure.

Patent Document 5 discloses a device in which no pipe used to transport the liquefied gas is provided outside the tank. This device is used for liquid hydrogen for vehicles. Inside the tank, a steam pipe surrounded by a double-wall structure having a gap between the two walls is provided. This steam pipe extends in an up-down direction, and a top end thereof projects into a gas phase space in a top part of the tank.

In a bottom end part of the steam pipe, a heater that heats the liquefied gas is provided. A part of the liquefied gas is heated by the heater, and the steam rises in the steam pipe and is transported to the gas phase space in the top part. Such transportation of the steam pressurizes the gas phase space in the tank, and the vaporized gas is supplied outside the tank from the gas phase space.

However, the provision of the heater involves a problem that a periodical inspection or the like is needed like in the case of Patent Document 4, in which the pump is used.

In addition, the top and bottom ends of the double-wall structure surrounding the steam pipe are opened. Therefore, the liquefied gas going up in the steam pipe flows into the gap between the walls. Thus, heat is not insulated between the inside and the outside of the steam pipe. As a result, the thermal energy of the steam pipe raises the temperature of the liquefied gas in the tank, which would otherwise be kept at a low temperature.

### CITATION LIST

### PATENT LITERATURE

Patent Document 1: Japanese Patent Publication for Opposition No. Sho 43-17874
Patent Document 2: Japanese Patent Publication for Opposition No. Sho 47-50983
Patent Document 3: Japanese Laid-Open Utility Model Publication No. Sho 48-76509
Patent Document 4: Japanese Patent No. 4597140
Patent Document 5: Japanese Laid-Open Patent Publication No. 2000-130692

### SUMMARY OF INVENTION

### TECHNICAL PROBLEM

The present invention has an object of improving safety, and allowing maintenance to be performed easily and also allowing pressure adjustment to be performed quickly.

### SOLUTION TO PROBLEM

First means for achieving the object is a gas supply device, comprising a supply path that is used to supply vaporized gas, obtained as a result of liquefied gas in a tank being vaporized by a heat exchanger, to a supply destination, and a reflux path that is used to reflux vaporized gas, obtained as a result of the liquefied gas in the tank being vaporized, to the tank; wherein: pressure adjustment means provided in the reflux path adjusts an inner pressure of the tank, so that gas is supplied via the supply path; the tank includes a vacuum heat-insulating layer, and an outer wall and an inner wall that sandwich the vacuum heat-insulating layer; a liquefied gas storage section that stores the liquefied gas is provided inside the inner wall; an inner heat-blocking chamber that is surrounded by the vacuum heat-insulating layer outside the liquefied gas storage section and vaporizes the liquefied gas is formed; a guide-out path, through which the liquefied gas is guided out from the liquefied gas storage section to the inner heat-blocking chamber, is formed between the liquefied gas storage section and the inner heat-blocking chamber; the supply path is connected to the liquefied gas storage section, and a downstream end of the reflux path is connected to a gas phase space in the liquefied gas storage section that is above the liquefied gas; an outlet through which the vaporized gas flows out to the reflux path is formed in a top part of the inner heat-blocking chamber; in the inner heat-blocking chamber, a heat exchange section that heats and vaporizes the liquefied gas introduced thereinto is provided; and used as a heating medium for the heat exchange section is the gas that circulates in a heating medium circulation path that extends from the inside to the outside of the tank to circulate gas, a part thereof that is located inside the tank being the heat exchange section.

Second means for achieving the object is a gas supply device, comprising a supply path that is used to supply vaporized gas, obtained as a result of liquefied gas in a tank being vaporized by a heat exchanger, to a supply destination, and a reflux path that is used to reflux vaporized gas, obtained as a result of the liquefied gas in the tank being vaporized, to the tank; wherein: pressure adjustment means provided in the reflux path adjusts an inner pressure of the tank, so that gas is supplied via the supply path; the tank includes a vacuum heat-insulating layer, and an outer wall and an inner wall that sandwich the vacuum heat-insulating layer; a liquefied gas storage section that stores the liquefied gas is provided inside the inner wall; a space surrounded by the inner wall is provided outside the inner wall, and an inner heat-blocking chamber that vaporizes the liquefied gas is formed in the space with the vacuum heat-insulating layer provided between the inner heat-blocking chamber and the space; a guide-out path, through which the liquefied gas is guided out from the liquefied gas storage section to the inner heat-blocking chamber, is formed between the liquefied gas storage section and the inner heat-blocking chamber; the supply path is connected to the liquefied gas storage section, and a downstream end of the reflux path is connected to a gas phase space in the liquefied gas storage section that is above the liquefied gas; an outlet through which the vaporized gas flows out to the reflux path is formed in a top part of the inner heat-blocking chamber; in the inner heat-blocking chamber, a heat exchange section that heats and vaporizes the liquefied gas introduced thereinto is provided; and used as a heating medium for the heat exchange section is the gas that circulates in a heating medium circulation path that extends from the inside to the outside of the tank to circulate gas, a part thereof that is located inside the tank being the heat exchange section.

The liquefied gas may be liquefied natural gas, liquid oxygen, liquid hydrogen, liquid nitrogen or the like.

The liquefied gas stored in the liquefied gas storage section in the tank is vaporized by the heat exchanger provided in the supply path and is supplied to the supply destination. In the meantime, a part of the liquefied gas in the liquefied gas storage section enters the inner heat-blocking chamber via the guide-out path, is vaporized by the heat exchange section, and is introduced into the liquefied gas storage section via the reflex path. The amount of the gas to be introduced into the liquefied gas storage section via the reflex path is adjusted by the pressure adjustment means by use of the pressure of the gas in the liquefied gas storage section. In accordance with the adjusted pressure, gas is supplied via the supply path.

In the inner heat-blocking chamber in the tank, the liquefied gas is heated by the heat exchange section. The liquefied gas storage section and the inner heat-blocking chamber are heat-insulated from each other. This heat insulation prevents the thermal energy of the inner heat-blocking chamber from being transmitted to the liquefied gas storage section, and thus prevents the temperature of the liquefied gas in the liquefied gas storage section from rising.

The inner heat-blocking chamber and the liquefied gas storage section are both provided in the tank. The liquefied gas is heated only by the heat exchange section in the inner heat-blocking chamber. Therefore, the liquefied gas does not need to flow outside the tank except for in the pipe used to supply the liquefied gas to the supply destination. The liquid phase part such as the liquefied gas or the like moves only in the tank. This prevents the liquefied gas from leaking outside the tank.

Third means for achieving the object is a movable body having the above-described gas supply device mounted thereon. The movable body is, for example, a marine vessel, a vehicle, an aircraft, a floating structure such as a mega-float or the like, a movable oxygen supply device placed on a mount, or the like.

Fourth means for achieving the object is an LNG-fueled marine vessel which has the above-described gas supply device mounted thereon, and in which liquefied natural gas is stored in the liquefied gas storage section as the liquefied gas.

### ADVANTAGEOUS EFFECTS OF INVENTION

According to the present invention, the inner heat-blocking chamber for pressure adjustment is accommodated in the tank, and a heating medium formed of gas is used for the heat exchange section, which is heating means for vaporization. Therefore, no external pipe in which a liquid phase such as liquefied gas or the like flows needs to be provided outside the tank except for the pipe used to supply the liquefied gas to the supply destination. Thus, the liquefied gas or the like is prevented from leaking outside the pipe. The body of the marine vessel or the like is prevented from being damaged due to the liquefied gas or the like having a very low temperature. This provides safety.

Since gas is used as a heating medium for heat exchange, a device such as a pump or the like is not required. This makes it unnecessary to perform large-scale maintenance such as inspection and exchange of the pump or the like. Thus, the gas supply device is easy to handle.

In addition, the pressure adjustment on the liquefied gas storage section can be indirectly performed by the pressure adjustment means by use of the pressure of the liquefied gas that is vaporized by the heat exchange section in the inner heat-blocking chamber. Therefore, the pressure adjustment can be performed quickly with high responsiveness.

### BRIEF DESCRIPTION OF DRAWINGS

[FIG. 1] FIG. 1 is a schematic systematic view of a gas supply device in an example.
[FIG. 2] FIG. 2 is a cross-sectional view of a tank of a gas supply device in another example.
[FIG. 3] FIG. 3 is a partially enlarged cross-sectional view of a tank of a gas supply device in still another example.
[FIG. 4] FIG. 4 is a schematic systematic view of a gas supply device in still another example.

### DESCRIPTION OF EMBODIMENTS

Hereinafter, an embodiment for carrying out the present invention will be described with reference to the drawings.

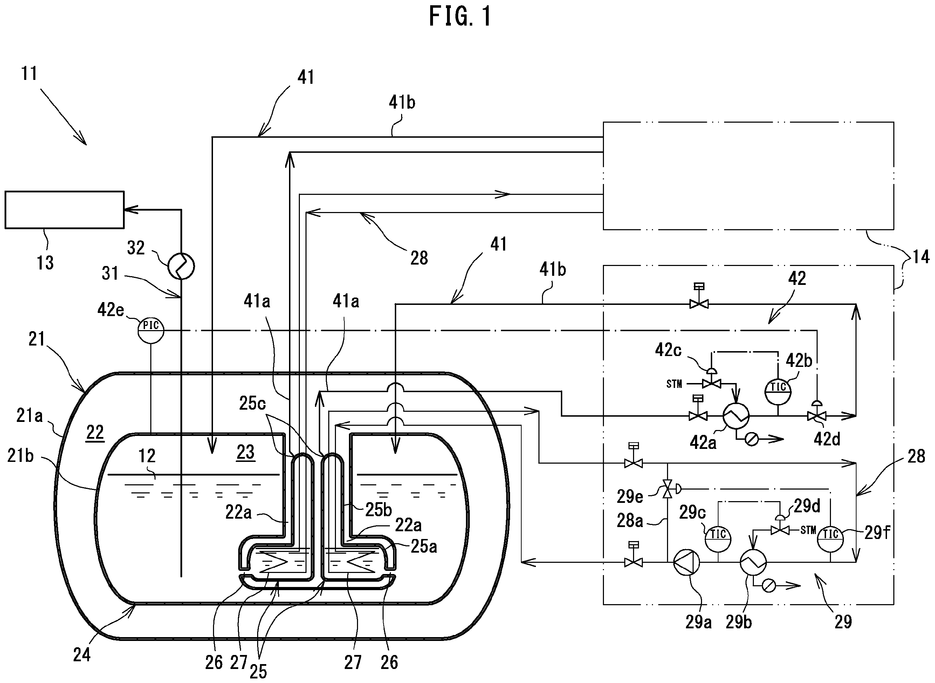

FIG. 1 is a schematic systematic view of a gas supply device 11 that is especially preferably mountable on an LNG-fueled marine vessel (not shown). The gas supply device 11 stores liquefied natural gas 12 (hereinafter, referred to as the "LNG 12") as liquefied gas.

A tank 21 that stores the LNG 12 is a low-temperature heat-insulating tank which includes a vacuum heat-insulating layer 22 that blocks heat conduction from outside and is durable against a very low temperature. The tank is connected to a supply path 31 used to supply vaporized LNG (hereinafter, referred to as the "vaporized gas") to gas consumption equipment 13 such as an engine or the like, which is a supply destination of the vaporized gas. The tank is also connected to reflex paths 41 used to reflux the vaporized gas to a gas phase space 23 in a top part of a liquefied gas storage section 24 in the tank 21 and to pressurize the gas phase space 23 to adjust an inner pressure thereof.

The path 31 and each of the paths 41 are independent from each other. The path 31 extends from the tank 21 and is connected to the gas consumption equipment 13. The LNG 12 pushed out by the inner pressure of the gas phase space 23 flows in the supply path 31 and is vaporized by a heat exchanger 32 provided in the supply path 31. The resultant LNG is supplied as the vaporized gas to the gas consumption equipment 13. The reflux paths 41 each include a portion 41a that is inside the tank and a portion 41b that is outside the tank. Both of the portion 41a and the portion 41b allow only the vaporized gas to flow therein.

In order to provide the reflux path 41, the tank 21 includes the liquefied gas storage section 24 that stores the LNG 12 and is connected to the supply path 31, and inner heat-blocking chambers 25 that are surrounded by the liquefied gas storage section 24 and vaporize the LNG 12. The inner heat-blocking chambers 25, and the liquefied gas storage section 24 that surrounds the inner heat-blocking chambers 25 and stores the LNG 12, are heat-insulated from each other by a vacuum heat-insulating layer 22a.

In the example shown in FIG. 1, two inner heat-blocking chambers 25 are surrounded by the liquefied gas storage section 24 of the tank 21. This is for the purpose of allowing vaporized gas to be supplied to the gas consumption equipment 13 even during inspection and maintenance of, or at the time of trouble of, the two inner heat-blocking chambers 25. The number of the inner heat-blocking chambers 25 may be three or more when necessary.

Now, the tank 21 will be described. The tank 21 includes an outer wall 21a and an inner wall 21b that sandwich the vacuum heat-insulating layer 22. The liquefied gas storage section 24 is provided inside the inner wall 21b. In a substantially central part of the liquefied gas storage section 24, a space surrounded by the inner wall 21b is provided. The two inner heat-blocking chambers 25 are located side by side in this space. Bottom parts of the inner heat-blocking chambers 25 are communicated to the liquefied gas storage section 24 respectively via guide-out paths 26 used to guide a part of the LNG 12 stored in the liquefied gas storage section 24 to the inner heat-blocking chambers 25.

The inner heat-blocking chambers 25 are suspended by a support (not shown) so as not to be in contact with the inner wall 21b, and are fixed by steady rests (not shown) that respectively connect the inner heat-blocking chambers 25 and the inner wall 21b. Thus, no extra stress is applied to parts at which the guide-out paths 26 are communicated to the inner heat-blocking chambers 25 and the liquefied gas storage section 24.

The inner heat-blocking chambers 25 are surrounded by the inner wall 21b surrounding the liquefied gas storage section 24. Therefore, even if the LNG 12 leaks from the inner heat-blocking chambers 25, the inner wall 21b blocks further leak thereof and prevents the marine vessel from being directly exposed to a very low temperature. Thus, safety is guaranteed.

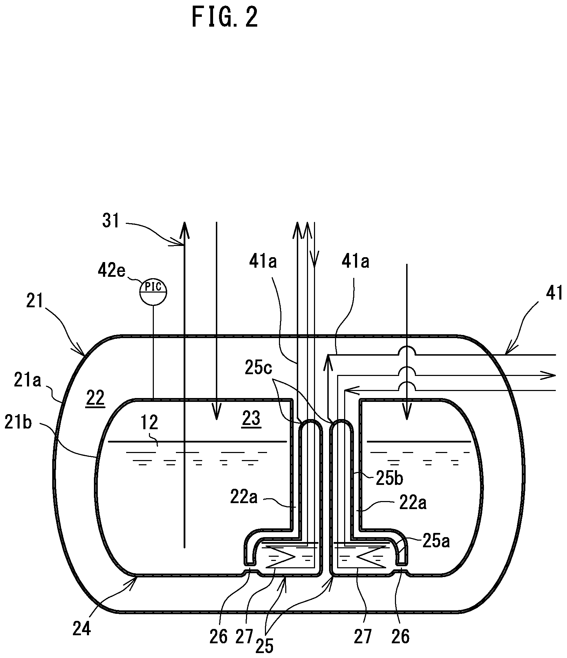

In FIG. 1, the inner heat-blocking chambers 25 are completely surrounded by the liquefied gas storage section 24. Alternatively, a structure shown in FIG. 2 may be adopted. In FIG. 2, a space running through a substantially central part of the liquefied gas storage section 24 in an up-down direction is provided. In the space, bottom surfaces of the inner heat-blocking chambers 25 and a bottom surface of the liquefied gas storage section 24 are on the same virtual plane.

The inner heat-blocking chambers 25 are each shaped such that a bottom portion 25a is longer in a horizontal direction than a top portion 25b. Inside each inner heat-blocking chamber 25, a heat exchange section 27 that heats and vaporizes the LNG 12 introduced thereinto is provided.

As a heating medium for the heat exchange section 27, a type of gas which has a boiling point equal to or lower than that of the LNG 12 and is not condensed or vaporized even at a temperature equal to or lower than a temperature at which the LNG 12 is stored. Such gas may be, for example, nitrogen gas. Specifically, a heating medium circulation path 28 in which the heating medium can be circulated is located outside the tank 21, and the heating medium circulation path 28 is provided with heating medium temperature adjustment means 29 that controls the temperature of the heating medium.

The heating medium temperature adjustment means 29 includes a blower 29a that circulates the heating medium, a heat exchanger 29b provided upstream with respect to the blower 29a, a thermometer 29c that is provided between the blower 29a and the heat exchanger 29b and measures the temperature of the heating medium flowing through the thermometer 29c, and an adjustment valve 29d that adjusts the amount of the heating medium to be supplied to the heat exchanger 29b based on the measurement result of the thermometer 29c.

Downstream with respect to the members 29a, 29b, 29c and 29d, a bypass 28a is provided. The bypass 28a is provided with an adjustment valve 29e that adjusts the amount of the heating medium flowing in the bypass 28a. The adjustment valve 29e is driven based on a measurement result of a thermometer 29f provided upstream with respect to the heat exchanger 29b. The bypass 28a is provided to prevent the heating medium of a very low temperature from flowing directly into the blower 29a at the start of the gas supply device 11.

As the heating medium for the heat exchanger 29b, water vapor, warm water, external air or any other appropriate medium is usable.

To the top portion 25b, which is a part of each inner heat-blocking chamber 25, the gas vaporized by the heat exchange section 27 rises. The top portion 25b has an outlet 25c through which the vaporized gas goes out.

The reflux paths 41 each extend outside the tank 21 from the top portion 25b via the outlet 25c and then is connected to the gas phase space 23 in a top part of the liquefied gas storage section 24. A part of the portion 41b (located outside the tank 21) that is downstream with respect to the tank 21 is provided with pressure adjustment means 42 that adjusts an inner pressure of the liquefied gas storage section 24.

The pressure adjustment means 42 includes a pressure meter 42e that measures the inner pressure of the gas phase space 23 in the top part of the tank 21, and a pressure adjustment valve 42d that is driven based on the measurement result of the pressure meter 42e. In order to heat the vaporized gas to an appropriate temperature, each reflux path 41 is provided with a heat exchange section 42a, a thermometer 42b that measures the temperature of the gas flowing downstream with respect to the heat exchange section 42a, and an adjustment valve 42c that adjusts the amount of a heating medium supplied to the heat exchange section 42a based on the measurement result of the thermometer 42b.

The heating medium for the heat exchange section 42a of the pressure adjustment means 42 may also be, for example, water vapor, warm water, external air or any other appropriate medium.

In FIG. 1, the heating medium temperature adjustment means 29 and the pressure adjustment means 42 surrounded by the phantom line are included in a control section 14 that is connected to each of the inner heat-blocking chamber 25. A plurality of the control sections 14 are provided in accordance with the number of the inner heat-blocking chambers 25.

The gas supply device 11 having the above-described structure operates as follows. The inner pressure of the gas phase space 23 is raised by the heating medium temperature adjustment means 29 and the pressure adjustment means 42. When the inner pressure of the gas phase space 23 is raised to a predetermined pressure that is required by the gas consumption equipment 13, the LNG 12 stored in the liquefied gas storage section 24 is vaporized by the heat exchanger 32 provided in the supply path 31, and is supplied as the vaporized gas to the gas consumption equipment 13. When the pressure at which the vaporized gas is supplied to the gas consumption equipment 13 is lower than the pressure required by the gas consumption equipment 13, the pressure adjustment valve 42d increases an opening angle thereof upon receiving a signal from the pressure meter 42e, and thus increases the amount of the vaporized gas to be introduced into the gas phase space 23 from the inner heat-blocking chamber 25 via the reflux path 41. In this manner, the pressure of the vaporized gas to be supplied to the gas consumption equipment can be adjusted.

More specifically, nitrogen gas as the heating medium that heats the LNG 12 is circulated in the heating medium circulation path 28, and the LNG 12 in the inner heat-blocking chamber 25 is heated via the heat exchange section 27.

At the start of the gas supply device 11, the temperature of the heating medium is measured by the thermometer 29f. When the measurement result is lower than a preset temperature, the adjustment valve 29e in the bypass 28a is opened. This is performed in order to prevent the heating medium having a very low temperature from flowing into the heating medium circulation path 28, so that the blower 29a is not significantly damaged. When the temperature of the heating medium is raised by heating, the adjustment valve 29e in the bypass 28a is closed. Thus, the heating medium heated by the heat exchanger 29b is circulated via the heat exchange section 27 to heat the LNG 12.

The LNG 12 in the inner heat-blocking chamber 25 is vaporized by heat exchange with the heated heating medium, and as a result, the top portion 25b of the inner heat-blocking chamber 25 is filled with the vaporized gas. The vaporized gas goes out via the outlet 25c and flows in the portion 41b of the reflex path 41, which is outside the tank 21.

In this process, the pressure adjustment valve 42d of the pressure adjustment means 42 automatically performs pressure adjustment based on the measurement result of the pressure meter 42e. The LNG 12 in the inner heat-blocking chamber 25 is vaporized by the heat exchange section 27 to become vaporized gas. This vaporized gas is supplied to the gas phase space 23 in the liquefied gas storage section 24 via the refluxed path 41 and consumed to control an inner pressure of the tank 21. The LNG 12 in the liquefied gas storage section 24 is autonomously supplemented to the inner heat-blocking chamber 25 via the guide-out path 26. When the amount of the gas consumed in the gas consumption equipment 13 is increased, an inner pressure of the top portion 25a of the inner heat-blocking chamber 25 is decreased, and thus a liquid surface of the LNG 12 in the inner heat-blocking chamber 25 is raised. As a result, a heat conduction area along which the LNG 12 contacts the heat exchange section 27 is increased, and the amount of the gas to be vaporized is automatically increased. By contrast, when the amount of the gas consumed in the gas consumption equipment 13 is decreased, the inner pressure of the top portion 25a is increased, and thus the liquid surface of the LNG 12 is lowered. As a result, the heat conduction area along which the LNG 12 contacts the heat exchange section 27 is decreased, and the amount of the gas to be vaporized is decreased. In this manner, the amount of the gas to be vaporized in the inner heat-blocking chamber 25 automatically follows the amount of the gas that is consumed to control the inner pressure of the tank 21.

As described above, when the gas vaporized in the inner heat-blocking chamber 25 is introduced into the gas phase space 23 of the liquefied gas storage section 24, the pressure of the vaporized gas is rapidly changed. Thus, the vaporized gas can be supplied to the gas consumption equipment 13 at a required pressure.

As described above, the gas supply device according to the present invention, which introduces the vaporized gas directly to the gas phase space 23 of the liquefied gas storage section 24 to control the pressure, has high responsiveness.

In addition, the tank 21, which is a part of the reflux path 41, includes a structure of vaporizing the LNG 12 so that the LNG 12 does not flow outside the tank 21 in a liquid phase state. Therefore, even if an external pipe is damaged for some reason, a liquid of a very low temperature is prevented from directly contacting the body of the marine vessel. This avoids brittle fracture of the body of the marine vessel or the like from occurring due to the low temperature of the LNG 12.

The heat exchange in the inner heat-blocking chamber 25 is performed by use of the heating medium formed of gas. This also prevents the liquid of a very low temperature from leaking outside the tank. The fluids that flow in the pipes outside the tank and are used to control the inner pressure of the gas phase space 23 are all of gas phase. This also provides the effect of avoiding brittle fracture, which would otherwise be caused by the low temperature. Thus, safety is guaranteed.

The gas supply device 11, especially when being mounted on a movable body, allows the structure of the movable body to be simplified and thus to decrease, for example, the weight and cost thereof, and also provides safety to the movable body.

The LNG 12 is heated by the heat exchange section 27 in the inner heat-blocking chamber 25. Therefore, it is not necessary to provide a device such as a pump or an electric heater in the tank 21. This provides an advantage that maintenance such as inspection or the like can be easily performed.

Hereinafter, alternation examples will be described. In the following description, elements which are the same as, or equivalent to, the above-described elements will bear the same reference signs thereto, and detailed descriptions thereof will be omitted.

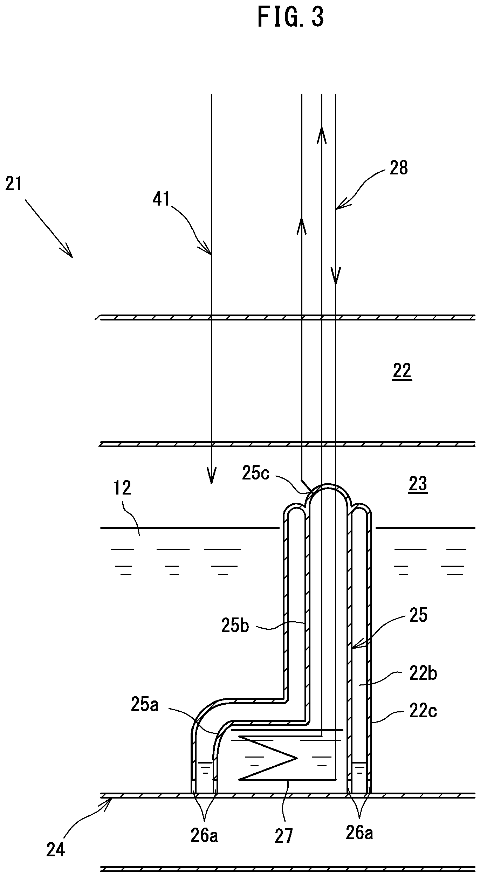

FIG. 3 shows an example in which the heat-insulating structure of the inner heat-blocking chamber 25 is realized by a heat-insulating-wall-forming space 22b. Heat that vaporizes the LNG 12 in the inner heat-blocking chamber 25 is transmitted to the heat-insulating-wall-forming space 22b, and the LNG 12 in the heat-insulating-wall-forming space 22b is vaporized. A top part of the heat-insulating-wall-forming space 22b is filled with such vaporized gas. A heat-insulating-wall-forming wall 22c is formed around a gap that is provided around the inner heat-blocking chamber 25, namely, the heat-insulating-wall-forming space 22b. The inner heat-blocking chamber 25 and the liquefied gas storage section 24 are communicated to each other via communication openings 26a formed at bottom ends of the inner heat-blocking chamber 25 and the heat-insulating-wall-forming wall 22c. The LNG 12 in the liquefied gas storage section 24 can enter the heat-insulating-wall-forming space 22b and the inner heat-blocking chamber 25 via the communication openings 26a.

The gas supply device 11 including the heat-insulating-wall-forming space 22b operates as follows. When the LNG 12 is heated by the heat exchange section 27, the top part of the inner heat-blocking chamber 25 is filled with the vaporized gas. The LNG 12 in the heat-insulating-wall-forming space 22b is also heated to be vaporized, and thus the heat-insulating-wall-forming space 22b is also filled with the vaporized gas. Thus, the heat-insulating-wall-forming space 22b acts as a heat-insulating wall.

One inner heat-blocking chamber 25 may be provided as shown in FIG. 3. Alternatively, two or more heat-blocking chambers 25 may be provided in the case where the gas phase space 23 has a large capacity and one inner heat-blocking chamber 25 cannot provide a sufficient amount of vaporized gas to adjust the pressure thereof, or an extra heat-blocking chamber 25 is required as, for example, backup in the case of emergency.

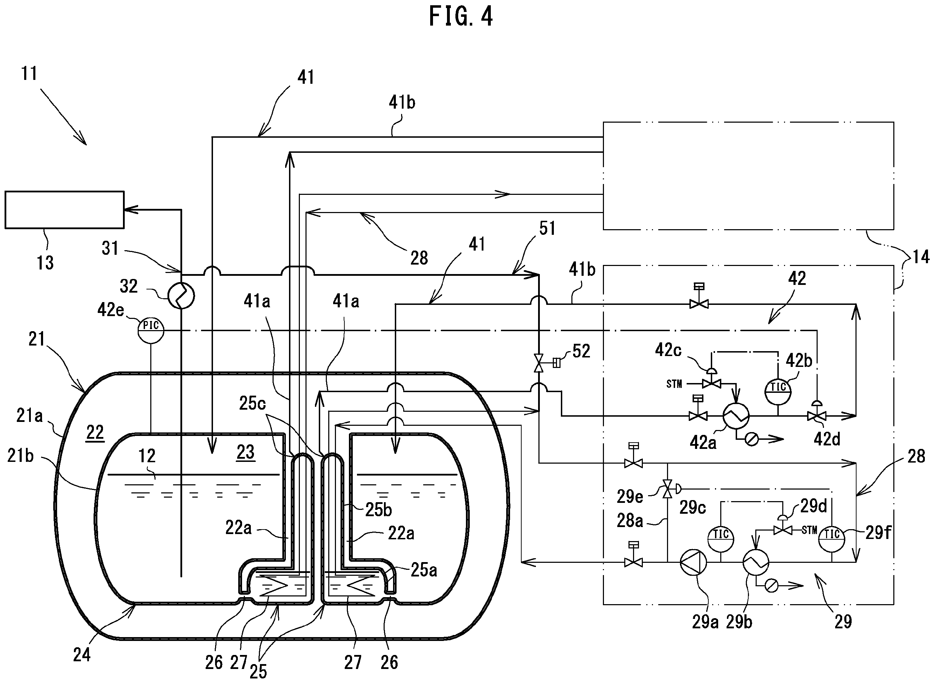

FIG. 4 shows an example of the gas supply device 11 in which vaporized gas flowing in the supply path 31 is used as the heating medium for the heat exchange section 27 in the heat-blocking chamber 25. Specifically, a heating medium supply path 51 is connected between the heating medium circulation path 28 and a position in the supply path 31 that is downstream with respect to the heat exchanger 32. The heating medium supply path 51 is provided with an adjustment valve 52.

The gas supply device 11 having such a structure operates as follows. When the tank 21 is initially filled with the LNG 12, the adjustment valve 52 is opened so that a part of vaporized gas is guided from the supply path 31, which is used to supply the vaporized gas to the gas consumption equipment 13 via the heat exchanger 32, to the heating medium circulation path 28. Thus, the heating medium circulation path 28 is filled with the vaporized gas. Then, the adjustment valve 52 is closed. The temperature of the vaporized gas filling the heating medium circulation path 28 can be controlled by the heating medium temperature adjustment means 29 as in the above-described example. An inner pressure of the heating medium circulation path 28 is kept lower than the inner pressure of the gas phase space 23 of the tank 21, so that the vaporized gas in the heating medium circulation path 28 is prevented from being liquefied.

The liquefied gas according to the present invention corresponds to the liquefied natural gas (LNG) 12 in the embodiment; and similarly,
the supply destination corresponds to the gas consumption equipment 13; and
the guide-out path corresponds to the guide-out path 26 and the communication openings 26a.

### REFERENCE SIGNS LIST

- 11: Gas supply device
- 12: Liquefied natural gas (LNG)
- 13: Gas consumption equipment
- 14: Control section
- 21: Tank
- 21a: Outer wall
- 21b: Inner wall
- 22, 22a: Vacuum heat-insulating layer
- 22b: Heat-insulating-wall-forming space
- 23: Gas phase space
- 24: Liquefied gas storage section
- 25: Inner heat-blocking chamber
- 25c: Outlet
- 26: Guide-out path
- 26a: Communication opening
- 27: Heat exchange section
- 28: Heating medium circulation path
- 29: Heating medium temperature adjustment means
- 31: Supply path
- 32: Heat exchanger
- 41: Reflux path
- 42: Pressure adjustment means
- 51: Heating medium supply path

## Claims

1. A gas supply device (11), comprising:
a supply path (31) that is used to supply vaporized gas, obtained as a result of liquefied gas in a tank (21) being vaporized by a heat exchanger, to a supply destination, whereby the supply path (31) extends from the tank (21) and is connected to a gas consumption equipment (13);
and a reflux path (41) that is used to reflux vaporized gas, obtained as a result of the liquefied gas in the tank (21) being vaporized, to the tank (21);
wherein:
pressure adjustment means (42) provided in the reflux path (41) adjusts an inner pressure of the tank (21), so that gas is supplied via the supply path (31);
the tank (21) includes a vacuum heat-insulating layer (22a), and an outer wall (21a) and an inner wall (21b) that sandwich the vacuum heat-insulating layer (22a);
a liquefied gas storage section (24) that stores the liquefied gas is provided inside the inner wall (21b);
an inner heat-blocking chamber (25) that vaporizes the liquefied gas is provided, which is surrounded by the vacuum heat-insulating layer (22a) and in the inner heat-blocking chamber (25), a heat exchange section (27) that heats and vaporizes the liquefied gas introduced thereinto is provided;
a guide-out path (26), through which the liquefied gas is guided out from the liquefied gas storage section (24) to the inner heat-blocking chamber (25), is formed between the liquefied gas storage section (24) and the inner heat-blocking chamber (25);
the supply path (31) is connected to the liquefied gas storage section (24),
**characterized in that** an end of the reflux path (41) is connected to a gas phase space (23) in the liquefied gas storage section (24) that is above the liquefied gas, whereby the supply path (31) and the reflux path (41) are independent from each other;
an outlet through which the vaporized gas flows out to the reflux path (41) is formed in a top part of the inner heat-blocking chamber (25);
and used as a heating medium for the heat exchange section (27) is the gas that circulates in a heating medium circulation path that extends from the inside to the outside of the tank (21) to circulate gas, a part thereof that is located inside the tank (21) being the heat exchange section (27).

2. A gas supply device according to claim 1, wherein the inner heat-blocking chamber (25) is surrounded by the liquefied gas storage section (24).

3. A gas supply device according to claims 1 or 2, wherein:
the pressure adjustment means (42) is provided in a part of the reflux path (41) that is downstream with respect to the tank (21); and
the pressure adjustment means (42) controls a flow rate of the gas to be refluxed based on an inner pressure of the liquefied gas storage section (24).

4. A gas supply device according to any one of claims 1 through 3, wherein a plurality of the inner heat-blocking chambers (25) are provided.

5. A gas supply device according to any one of claims 1 through 4, wherein used as the heating medium for the heat exchange section (27) is a part of gas that is vaporized by the heat exchanger (32) in a heating medium supply path (51) which connects a positon of the supply path that is downstream with respect to the heat exchange section (27) provided in the supply path to the heating medium circulation path, the part of the gas being guided to, and filing, the heating medium circulation path.

6. A gas supply device according to any one of claims 1 through 5, wherein the heating medium circulation path (28) is provided with heating medium temperature adjustment means that adjusts a temperature of the heating medium.

7. A movable body, having a gas supply device according to any one of claims 1 through 6 mounted thereon.

8. A gas supply device according to any one of claims 1 through 6, wherein:
the liquefied gas is liquefied natural gas; and
the tank (21) is mountable on a marine vessel.

9. An LNG-fueled marine vessel, having a gas supply device according to any one of claims 1 through 6 mounted thereon;
wherein liquefied natural gas is stored in the liquefied gas storage section as the liquefied gas.

10. A method for operating a gas supply device (11), comprising:
a supply path (31) that is used to supply vaporized gas, obtained as a result of liquefied gas in a tank (21) being vaporized by a heat exchanger, to a supply destination, whereby the supply path (31) extends from the tank (21) and is connected to a gas consumption equipment (13);
and a reflux path (41) that is used to reflux vaporized gas, obtained as a result of the liquefied gas in the tank (21) being vaporized, to the tank (21);
wherein:
pressure adjustment means (42) provided in the reflux path (41) adjusts an inner pressure of the tank (21), so that gas is supplied via the supply path (31);
the tank (21) includes a vacuum heat-insulating layer (22a), and an outer wall (21a) and an inner wall (21b) that sandwich the vacuum heat-insulating layer (22a);
a liquefied gas storage section (24) that stores the liquefied gas is provided inside the inner wall (21b);
an inner heat-blocking chamber (25) that vaporizes the liquefied gas is provided, which is surrounded by the vacuum heat-insulating layer (22a);
**characterized in that** in the inner heat-blocking chamber (25), a heat exchange section (27) that heats and vaporizes the liquefied gas introduced thereinto is provided; a guide-out path (26), through which the liquefied gas is guided out from the liquefied gas storage section (24) to the inner heat-blocking chamber (25), is formed between the liquefied gas storage section (24) and the inner heat-blocking chamber (25);
the supply path (31) is connected to the liquefied gas storage section (24), and an end of the reflux path (41) is connected to a gas phase space (23) in the liquefied gas storage section (24) that is above the liquefied gas, whereby the supply path (31) and the reflux path (41) are independent from each other;
an outlet through which the vaporized gas flows out to the reflux path (41) is formed in a top part of the inner heat-blocking chamber (25);
and used as a heating medium for the heat exchange section (27) is the gas that circulates in a heating medium circulation path that extends from the inside to the outside of the tank (21) to circulate gas, a part thereof that is located inside the tank (21) being the heat exchange section (27).

## Patentansprüche

1. Gaszufuhrvorrichtung (11), umfassend:
einen Zufuhrpfad (31), der dazu verwendet wird, verdampftes Gas, das gewonnen wird, indem Flüssiggas in einem Tank (21) durch einen Wärmetauscher verdampft wird, zu einem Zufuhrziel zu führen, wobei sich der Zufuhrpfad (31) ausgehend von dem Tank (21) erstreckt und mit einer Gasverbraucheinrichtung (13) verbunden ist;
und einen Rückflusspfad (41), der dazu verwendet wird, verdampftes Gas, das gewonnen wird, indem das Flüssiggas in dem Tank (21) verdampft wird, zu dem Tank (21) zurückzuführen;
wobei:
ein in dem Rückflusspfad (41) vorgesehenes Druckeinstellungsmittel (42) einen Innendruck des Tanks (21) derart einstellt, dass Gas über den Zufuhrpfad (31) zugeführt wird;
der Tank (21) eine Vakuum-Wärmeisolierungsschicht (22a) sowie eine Außenwand (21a) und eine Innenwand (21b) aufweist, welche die Vakuum-Wärmeisolierungsschicht (22a) zwischen sich aufnehmen;
ein Flüssiggasspeicherabschnitt (24), der das Flüssiggas speichert, innerhalb der Innenwand (21b) vorgesehen ist;
eine das Flüssiggas verdampfende innere wärmeblockierende Kammer (25) vorgesehen ist, die von der Vakuum-Wärmeisolierungsschicht (22a) umgeben ist, und in der inneren wärmeblockierenden Kammer (25) ein Wärmetauscherabschnitt (27) vorgesehen ist, der das darin eingeführte Flüssiggas erwärmt und verdampft;
ein Ausleitpfad (26), durch den das Flüssiggas aus dem Flüssiggasspeicherabschnitt (24) zur inneren wärmeblockierenden Kammer (25) ausgeleitet wird, zwischen dem Flüssiggasspeicherabschnitt (24) und der inneren wärmeblockierenden Kammer (25) gebildet ist;
wobei der Zufuhrpfad (31) mit dem Flüssiggasspeicherabschnitt (24) verbunden ist,
**dadurch gekennzeichnet, dass** ein Ende des Rückflusspfads (41) mit einem Gasphasenraum (23) in dem Flüssiggasspeicherabschnitt (24) verbunden ist, der sich über dem Flüssiggas befindet, wobei der Zufuhrpfad (31) und der Rückflusspfad (41) unabhängig voneinander sind;
ein Auslass, durch den das verdampfte Gas zu dem Rückflusspfad (41) herausströmt, in einem oberen Teil der inneren wärmeblockierenden Kammer (25) gebildet ist;
und als Heizmedium für den Wärmetauscherabschnitt (27) das Gas verwendet wird, das in einem Heizmedium-Umlaufpfad zirkuliert, der sich vom Inneren des Tanks (21) nach außen erstreckt, um Gas in Umlauf zu setzen, wobei ein Teil davon, der sich innerhalb des Tanks (21) befindet, der Wärmetauscherabschnitt (27) ist.

2. Gaszufuhrvorrichtung nach Anspruch 1, wobei die innere wärmeblockierende Kammer (25) von dem Flüssiggasspeicherabschnitt (24) umgeben ist.

3. Gaszufuhrvorrichtung nach Anspruch 1 oder 2, wobei:
das Druckeinstellungsmittel (42) in einem Teil des Rückflusspfads (41) vorgesehen ist, der sich stromabwärts in Bezug auf den Tank (21) befindet; und
das Druckeinstellungsmittel (42) auf Basis des Innendrucks des Flüssiggasspeicherabschnitts (24) einen Durchsatz des zurückzuführenden Gases steuert.

4. Gaszufuhrvorrichtung nach einem der Ansprüche 1 bis 3, wobei eine Vielzahl von inneren wärmeblockierenden Kammern (25) vorgesehen sind.

5. Gaszufuhrvorrichtung nach einem der Ansprüche 1 bis 4, wobei als Heizmedium für den Wärmetauscherabschnitt (27) ein Teil des Gases verwendet wird, das durch den Wärmetauscher (32) in einem Heizmediumzufuhrpfad (51) verdampft wird, der eine Stelle des Zufuhrpfads, die sich in Bezug auf den in dem Zufuhrpfad angeordneten Wärmetauscherabschnitt (27) stromabwärts befindet, mit dem Heizmedium-Umlaufpfad verbindet, wobei der Teil des Gases zum Heizmedium-Umlaufpfad geführt wird und diesen füllt.

6. Gaszufuhrvorrichtung nach einem der Ansprüche 1 bis 5, wobei der Heizmedium-Umlaufpfad (28) mit einem Mittel zur Einstellung der Temperatur des Heizmediums versehen ist, das eine Temperatur des Heizmediums einstellt.

7. Beweglicher Körper, an dem eine Gaszufuhrvorrichtung nach einem der Ansprüche 1 bis 6 montiert ist.

8. Gaszufuhrvorrichtung nach einem der Ansprüche 1 bis 6, wobei:
das Flüssiggas Flüssigerdgas ist; und
der Tank (21) an einem Wasserfahrzeug montierbar ist.

9. Mit Flüssigerdgas betanktes Wasserfahrzeug, an dem eine Gaszufuhrvorrichtung nach einem der Ansprüche 1 bis 6 montiert ist;
wobei Flüssigerdgas in dem Flüssiggasspeicherabschnitt als Flüssiggas gespeichert ist.

10. Verfahren zum Betreiben einer Gaszufuhrvorrichtung (11), umfassend:
einen Zufuhrpfad (31), der dazu verwendet wird, verdampftes Gas, das gewonnen wird, indem Flüssiggas in einem Tank (21) durch einen Wärmetauscher verdampft wird, zu einem Zufuhrziel zu führen, wobei sich der Zufuhrpfad (31) ausgehend von dem Tank (21) erstreckt und mit einer Gasverbraucheinrichtung (13) verbunden ist;
und einen Rückflusspfad (41), der dazu verwendet wird, verdampftes Gas, das gewonnen wird, indem das Flüssiggas in dem Tank (21) verdampft wird, zu dem Tank (21) zurückzuführen;
wobei:
ein in dem Rückflusspfad (41) vorgesehenes Druckeinstellungsmittel (42) einen Innendruck des Tanks (21) derart einstellt, dass Gas über den Zufuhrpfad (31) zugeführt wird;
der Tank (21) eine Vakuum-Wärmeisolierungsschicht (22a) sowie eine Außenwand (21a) und eine Innenwand (21b) aufweist, welche die Vakuum-Wärmeisolierungsschicht (22a) zwischen sich aufnehmen;
ein Flüssiggasspeicherabschnitt (24), der das Flüssiggas speichert, innerhalb der Innenwand (21b) vorgesehen ist;
eine das Flüssiggas verdampfende innere wärmeblockierende Kammer (25) vorgesehen ist, die von der Vakuum-Wärmeisolierungsschicht (22a) umgeben ist;
**dadurch gekennzeichnet, dass** in der inneren wärmeblockierenden Kammer (25) ein Wärmetauscherabschnitt (27) vorgesehen ist, der das darin eingeführte Flüssiggas erwärmt und verdampft; ein Ausleitpfad (26), durch den das Flüssiggas aus dem Flüssiggasspeicherabschnitt (24) zur inneren wärmeblockierenden Kammer (25) ausgeleitet wird, zwischen dem Flüssiggasspeicherabschnitt (24) und der inneren wärmeblockierenden Kammer (25) gebildet ist;
der Zufuhrpfad (31) mit dem Flüssiggasspeicherabschnitt (24) verbunden ist und ein Ende des Rückflusspfads (41) mit einem Gasphasenraum (23) in dem Flüssiggasspeicherabschnitt (24) verbunden ist, der sich über dem Flüssiggas befindet, wobei der Zufuhrpfad (31) und der Rückflusspfad (41) unabhängig voneinander sind;
ein Auslass, durch den das verdampfte Gas zu dem Rückflusspfad (41) herausströmt, in einem oberen Teil der inneren wärmeblockierenden Kammer (25) gebildet ist;
und als Heizmedium für den Wärmetauscherabschnitt (27) das Gas verwendet wird, das in einem Heizmedium-Umlaufpfad zirkuliert, der sich vom Inneren des Tanks (21) nach außen erstreckt, um Gas in Umlauf zu setzen, wobei ein Teil davon, der sich innerhalb des Tanks (21) befindet, der Wärmetauscherabschnitt (27) ist.

## Revendications

1. Dispositif d'alimentation en gaz (11) comprenant :
un trajet d'alimentation (31) utilisé pour amener du gaz vaporisé obtenu par la vaporisation de gaz liquéfié dans une cuve (21) par un échangeur de chaleur vers une destination de l'alimentation, lequel trajet d'alimentation (31) s'étend à partir de la cuve (21) et est relié à un équipement consommateur de gaz (13) ;
et un trajet de retour (41) utilisé pour amener le gaz vaporisé obtenu par vaporisation du gaz liquéfié dans la cuve (21) vers la cuve (21) ;
dans lequel :
un moyen de réglage de la pression (42) prévu dans le trajet de retour (41) règle une pression interne de la cuve (21) de telle sorte que du gaz soit amené via le trajet d'alimentation (31) ;
la cuve (21) comprend une couche isolante thermique sous vide (22a) et une paroi extérieure (21 a) et une paroi intérieure (21 b) qui entourent en sandwich la couche isolante thermique sous vide (22a) ;
une section de stockage du gaz liquéfié (24) qui stocke le gaz liquéfié est prévue à l'intérieur de la paroi intérieure (21 b) ;
il est prévu une chambre intérieure bloquant la chaleur (25) où le gaz liquéfié est vaporisé, qui est entourée par la couche isolante thermique sous vide (22a), et il est prévu dans la chambre intérieure bloquant la chaleur (25) une section d'échange de chaleur (27) qui chauffe et vaporise le gaz liquéfié qui y est introduit ;
un trajet de guidage vers la sortie (26), par lequel le gaz liquéfié est guidé hors de la section de stockage du gaz liquéfié (24) vers la chambre intérieure bloquant la chaleur (25), est formé entre la section de stockage du gaz liquéfié (24) et la chambre intérieure bloquant la chaleur (25) ;
le trajet d'alimentation (31) est raccordé à la section de stockage du gaz liquéfié (24) ;
**caractérisé en ce qu'**une extrémité du trajet de retour (41) est raccordée à un espace de phase gazeuse (23) dans la section de stockage du gaz liquéfié (24) qui se trouve au-dessus du gaz liquéfié, de sorte que le trajet d'alimentation (31) et le trajet de retour (41) sont indépendants l'un de l'autre ;
une sortie par laquelle le gaz vaporisé sort vers le trajet de retour (41) est formée dans une partie supérieure de la chambre intérieure bloquant la chaleur (25) ;
et le fluide caloporteur utilisé pour la section d'échange de chaleur (27) est le gaz qui circule dans un trajet de circulation de fluide caloporteur qui s'étend de l'intérieur vers l'extérieur de la cuve (21) pour faire circuler du gaz, dont une partie située à l'intérieur de la cuve (21) forme la section d'échange de chaleur (27).

2. Dispositif d'alimentation en gaz selon la revendication 1, dans lequel la chambre intérieure bloquant la chaleur (25) est entourée par la section de stockage du gaz liquéfié (24).

3. Dispositif d'alimentation en gaz selon les revendications 1 ou 2, dans lequel :
le moyen de réglage de la pression (42) est prévu dans une partie du trajet de retour (41) qui se trouve en aval de la cuve (21) et
le moyen de réglage de la pression (42) contrôle un débit du gaz à retourner en fonction d'une pression interne de la section de stockage du gaz liquéfié (24).

4. Dispositif d'alimentation en gaz selon l'une quelconque des revendications 1 à 3, dans lequel plusieurs chambres intérieures bloquant la chaleur (25) sont prévues.

5. Dispositif d'alimentation en gaz selon l'une quelconque des revendications 1 à 4, dans lequel le fluide caloporteur utilisé pour la section d'échange de chaleur (27) est une partie du gaz vaporisé par l'échangeur de chaleur (32) dans un trajet d'alimentation en fluide caloporteur (51) qui relie une position du trajet d'alimentation située en aval de la section d'échange de chaleur (27) prévue dans le trajet d'alimentation au trajet de circulation de fluide caloporteur, la partie du gaz étant amenée au trajet de circulation de fluide caloporteur et remplissant celui-ci.

6. Dispositif d'alimentation en gaz selon l'une quelconque des revendications 1 à 5, dans lequel le trajet de circulation de fluide caloporteur (28) est muni de moyens de réglage de la température du fluide caloporteur afin de régler la température du fluide caloporteur.

7. Corps mobile sur lequel est monté un dispositif d'alimentation en gaz selon l'une quelconque des revendications 1 à 6.

8. Dispositif d'alimentation en gaz selon l'une quelconque des revendications 1 à 6, dans lequel :
le gaz liquéfié est du gaz naturel liquéfié et
la cuve (21) peut être montée sur un navire maritime.

9. Navire maritime fonctionnant au GNL, sur lequel est monté un dispositif d'alimentation en gaz selon l'une quelconque des revendications 1 à 6,
dans lequel du gaz naturel liquéfié est stocké dans la section de stockage du gaz liquéfié pour servir de gaz liquéfié.

10. Procédé pour faire fonctionner un dispositif d'alimentation en gaz (11), comprenant :
un trajet d'alimentation (31) utilisé pour amener du gaz vaporisé obtenu par la vaporisation de gaz liquéfié dans une cuve (21) par un échangeur de chaleur vers une destination de l'alimentation, lequel trajet d'alimentation (31) s'étend à partir de la cuve (21) et est relié à un équipement consommateur de gaz (13) ;
et un trajet de retour (41) utilisé pour amener le gaz vaporisé obtenu par vaporisation du gaz liquéfié dans la cuve (21) vers la cuve (21) ;
dans lequel :
un moyen de réglage de la pression (42) prévu dans le trajet de retour (41) règle une pression interne de la cuve (21) de telle sorte que du gaz soit amené via le trajet d'alimentation (31) ;
la cuve (21) comprend une couche isolante thermique sous vide (22a) et une paroi extérieure (21 a) et une paroi intérieure (21 b) qui entourent en sandwich la couche isolante thermique sous vide (22a) ;
une section de stockage du gaz liquéfié (24) qui stocke le gaz liquéfié est prévue à l'intérieur de la paroi intérieure (21 b) ;
il est prévu une chambre intérieure bloquant la chaleur (25) où le gaz liquéfié est vaporisé, qui est entourée par la couche isolante thermique sous vide (22a), **caractérisé en ce qu'**il est prévu dans la chambre intérieure bloquant la chaleur (25) une section d'échange de chaleur (27) qui chauffe et vaporise le gaz liquéfié qui y est introduit ;
un trajet de guidage vers la sortie (26), par lequel le gaz liquéfié est guidé hors de la section de stockage du gaz liquéfié (24) vers la chambre intérieure bloquant la chaleur (25), est formé entre la section de stockage du gaz liquéfié (24) et la chambre intérieure bloquant la chaleur (25) ;
le trajet d'alimentation (31) est raccordé à la section de stockage du gaz liquéfié (24), et une extrémité du trajet de retour (41) est raccordée à un espace de phase gazeuse (23) dans la section de stockage du gaz liquéfié (24) qui se trouve au-dessus du gaz liquéfié, de sorte que le trajet d'alimentation (31) et le trajet de retour (41) sont indépendants l'un de l'autre ;
une sortie par laquelle le gaz vaporisé sort vers le trajet de retour (41) est formée dans une partie supérieure de la chambre intérieure bloquant la chaleur (25) ;
et le fluide caloporteur utilisé pour la section d'échange de chaleur (27) est le gaz qui circule dans un trajet de circulation de fluide caloporteur qui s'étend de l'intérieur vers l'extérieur de la cuve (21) pour faire circuler du gaz, dont une partie située à l'intérieur de la cuve (21) forme la section d'échange de chaleur (27).
